# EUROPEAN PATENT APPLICATION

(11) **EP 4 382 455 A1**
(43) Date of publication of application: **12.06.2024**
(21) Application number: 22212518.9
(22) Date of filing: 09.12.2022
(51) Int. Cl.: B65G 11/20

(54) **A FUNNEL FOR CONVEYING BULK MATERIAL**

(71) Applicant: Deprez Construct NV, 8610 Kortemark (BE)
(72) Inventor: Deprez, Johan, 8680 Koekelare (BE); De Munster, Tom, 8830 Hooglede (BE)
(74) Representative: IP HILLS NV

(57) **Abstract**

According to a first aspect of the invention, a funnel for conveying bulk material is provided, said funnel comprising a conical duct having an inner surface between an upper opening for receiving said bulk material and a lower opening for letting out said bulk material from said conical duct and at least a first rotary scraper. The scraper has a lower end oriented to the lower opening of the duct and an upper end oriented towards the upper opening of the duct; contacts said inner surface along a contact path between lower to upper opening of the conical duct and is rotatable in the duct. The at least first scraper is held in contact to the inner surface, and is rotated in the inner volume of the duct, by at least a first rod extending in a direction radially outwards from the conical duct axis, said at least first rod being connected to either the lower end of the first scraper via the lower opening of the duct or the upper end of the first scraper via the upper opening of the duct.

## Description

### Field of the Invention

The present invention generally relates to funnels to convey bulk material, such as sludge, and the use of such funnel.

### Background of the Invention

Bulk material is transported often in bulk containers, big bags, dump truck, hauls and alike. Not all transport can however be realised by such vehicles. In some circumstances, the bulk goods are conveyed by transport belts from one position to the other. such transportation may also be cheaper as compared to transportation by road.

However in most cases, a bulk good is to be switched from one kind of transportation, usually road transportation, to transportation by conveyor belt. The bulk good is to be guided or conveyed properly onto the transport belt, preferably without too many losses, and without too many interruptions of the conveying operation. Funnels to bring bulk goods to a transport belt, may e.g. be found in KR 1020190167227.

A problem which often occurs, is when rather sticky bulk good is to be conveyed through such funnel. Clogging of the funnel may occur, thereby interrupting the process, when the bulk goods start to stick to the parts of the funnel, like the inner side of a conical or tubular part of the duct of the funnel. As also shown in KR 1020190167227, a scraper may be rotatably positioned in the duct, to scrape of the inner wall of the duct, thereby removing to a large extent the bulk good from the wall part where the scraper engages the inner wall.

### Summary of the Invention

According to a first aspect of the invention, a funnel for conveying bulk material is provided, said funnel comprising a conical duct having an inner surface between an upper opening for receiving said bulk material and a lower opening for letting out said bulk material from said conical duct and at least a first rotary scraper. The scraper has a lower end oriented to the lower opening of the duct and an upper end oriented towards the upper opening of the duct; contacts said inner surface along a contact path between lower to upper opening of the conical duct and is rotatable in the duct. The at least first scraper is held in contact to the inner surface, and is rotated in the inner volume of the duct, by at least a first rod extending in a direction radially outwards from the conical duct axis, said at least first rod being connected to either the lower end of the first scraper via the lower opening of the duct or the upper end of the first scraper via the upper opening of the duct.

A conical duct means a duct having the shape of a truncated cone, preferably being a frustum of a cone.

Obviously, a coupling piece or element may be used to connect the first rod to the one end of the scraper, for bridging the rim of the lower or upper opening of the conical duct.

The bulk material may be any kind of bulk material, such as but not limited to sludge, dry, semi-dry or wet sand, dredged material, dried dredged material, mortar, concrete, dry mortar, dry concrete, screed, plaster, cement, sewage sludge, adhesive substance, granules of polymer or crushed stone or stone rubble, dried manure, chemical powders, chemical sludge, bulk waste, crushed materials, crushed automobile tires, fiber and fiber materials, foodstuffs, food powder, like milled corn or grains, dried vegetable powder like potato or corn powder, meat or fish, crushed meat or fish, dough, confectionery, dried food materials, freeze-dried food materials, materials in preparation for a drying or baking process, and the like.

The funnel according to the first aspect of the invention may have its use in the agricultural sector, the construction sector, road construction sector, the hydraulic engineering sector, in maintenance of rivers, streams and waters, the waste processing sector, soil remediation sector, the food sector, chemical sector, and many more.

The upper opening of the conical duct is larger in diameter as compared to the lower opening of the conical duct.

The funnels according to the first aspect of the invention, have the advantage that there are substantially no locations along the inner wall of the duct, which are not engaged, hence scraped, by the scraper or scrapers. In particularly when conveying sticky bulk material, like sludges, these goods tend to stick to every part of the funnel which periodically does not get rid of the sludge sticking to it by the scraping action.

Scrapers mounted on a rod which is coaxially oriented, along with the axis of the duct, will become loaded with sticking bulb material. No action to remove this charge is applied. Hence the funnel may become clogged when too much bulk material sticks to these parts.

Hence for funnels according to the first aspect of the invention, the inner volume of the conical duct, the area above the upper opening and the area under the lower opening of the duct, may be kept substantially free of any object which may obstruct the flow of sludge from the input area above the upper opening to the output area under the lower opening of the duct. Substantially no part of the surface of the funnel coming into contact with the bulk material is left unscraped. This allows to displace and convey heavily sticking bulk material, and direct this bulk material to e.g. a removing means, like a transport belt, positioned under the funnel's lower opening. Any non-scraped surface in the guiding path of such bulk material, may cause a clogging of the funnel. As such an operationally more reliable funnel operation can be guaranteed.

Next to this first rotary scraper, a second or even further scraper may be installed in the conical duct. Each of these second or further scrapers may be substantially identical to the first scraper. Each of the second or even further scraper may have a lower end oriented to the lower opening of the duct and an upper end oriented towards the upper opening of the duct, and contacting (at least partially) said inner surface along a contact path between lower to upper opening of the conical duct while being rotatable in the funnel.

These second or further scrapers each may be held in contact to the inner surface, and is rotated in the inner volume of the duct, by a rod extending in a direction radially outwards from the conical duct axis, said rod being connected to either the lower end of the first scraper via the lower opening of the duct, or the upper end of the first scraper via the upper opening of the duct.

Preferably the second and further scrapers are connected to a rod a via the upper opening of the duct at the same of the lower or upper end, which rod or rods extends radially outwards via the same opening of the duct.

The at least first rod, and possibly also each of the second and/or further scrapers, may be held in contact to the inner surface by two rods, one being said first rod, one rod being connected to the lower end of the first scraper via the lower opening of the duct, the other, second rod being connected to the upper end of the first scraper via the upper opening of the duct. Only one of the two rods may be used to rotate in the inner volume of the duct, though optionally both rods may be used to rotate in the inner volume of the duct.

The at least first rod, and possibly also each of the second and/or further scrapers, may be held in contact to the inner surface by said first rod, being said first rod, one rod being connected to the lower end of the first scraper via the lower opening of the duct, the other, second rod, having a l or u shape, one leg of the profile being connected to the scrapers outer end, the other leg being oriented substantially parallel to the outer surface of the conical duct, and extending along the outer surface the conical duct.

The funnel may further comprise a frame to hold the various parts of the funnel in place, and to position the funnel during operation.

According to some embodiments, the at least first rod may be connected to the lower end of the first scraper via the lower opening of the duct. Possibly the first scraper is held in contact to the inner surface and is rotated in the inner volume of the duct by the at least a first rod extending in a direction radially outwards from the conical duct axis, this at least first rod being connected to the lower end of the first scraper via the lower opening of the duct, and at least a second rod extending in a direction radially outwards from the conical duct axis, the second rod being connected to the upper end of the first scraper via the upper opening of the duct.

According to some embodiments, the second rod may form a hook which is positioned over the upper rim of the upper opening of the duct or over the lower rim of the lower opening of the duct. This second rod may form a hook having a profile, the profile having a flank extending along the outer surface of the duct.. The second rod may form a hook which is positioned over the upper rim of the upper opening of the duct. Possibly the second rod may form a hook has a profile having a flank extending along the outer surface of the duct, said flank being provided with at least one wheel adapted to roll around the outer surface of the duct when said at least first scraper is rotated in said duct. The flank of this profile, which may be e.g. a U-shaped, L-shaped, V-shaped, Y-shaped profile, may be provided with one or more than one, like two, three, four or even more wheels. The wheel or wheels may rotate in a channel foreseen around the outer surface of the duct. The wheels may be free-running wheels.

According to some embodiments, the second rod may be mount on a bearing, the bearing is positioned around the outer side of the conical duct.

This bearing may preferably be a slewing bearing or a thrust bearing.

A thrust bearing is a bearing comprising two discs, also referred to as raceway discs, mutually axially separated by a set of rolling elements, like balls, rollers, needles and alike and which are often held in a cage. The two discs, coaxially positioned, may rotate around the common axis in view of each other due to the presence of the rolling elements positioned between them. In use, one disc is fixed to the frame, being the stationary disc. The other disc may axially rotate in view of the stationary disc, and is called rotating disc. Any thrust bearing may be used. The thrust bearing may preferably be a thrust ball bearing, a thrust roller bearing, a thrust cylindrical bearing or a thrust tapered roller bearing.

A slewing bearing is a bearing comprising two coaxially positioned rings or races, one ring or race, being the inner ring or inner race, is encompassed by the other ring or race, being the outer ring or race, while rolling elements being radially positioned between the two rings or races and allowing the one ring or race to rotate in view of the other around the common axis. In use, one ring or race is fixed to the frame, being the stationary ring or stationary race. The other ring or race may axially rotate in view of the stationary ring or race, and is called rotating ring or race. Any slewing bearing may be used. The slewing bearing may preferably be a ball bearing, a roller bearing, a cylindrical bearing or a tapered roller bearing. Most preferably a slewing ball bearing is used, optionally comprising one or more than one, like two or three, rows of balls.

The stationary disc or race of the bearing may be coupled to the frame of the funnel, optionally to the conical duct itself. The rotatable disc race is connected to the second rod, optionally by means of one or more intermediate connection pieces.

Preferably a thrust bearing is used.

According to some embodiments, the at least first rod of the rotary scraper may be mount on a bearing, the bearing is positioned around the outer side of the conical duct.

This bearing may preferably be a slewing bearing or a thrust bearing.

The stationary disc or race of the bearing may be coupled to the frame of the funnel, optionally to the conical duct itself. The rotatable disc race is connected to the first rod, optionally by means of one or more intermediate connection pieces. This bearing may be a thrust bearing.

In case of more than one scraper, some or all of the other first rods of some or all the other scrapers may be mount on the same bearing.

The stationary part of the thrust bearing may be connected to the outer surface of the conical duct, while the rotating part may be used for mounting the first rod or first rods onto this rotating part. The rotating part may be provided with teeth being part of a gear or chain transmission. Alternatively, this rotating part may be provided with a grove or face for receiving a belt being part of a belt transmission.

According to some embodiments, the driving mechanism to rotate the first rotary scraper may be positioned radially adjacent the outer side of the conical duct.

In case of more than one scraper, this driving mechanism may rotate all other scrapers present in the funnel according to the invention.

This driving mechanism may comprise a motor and/or a gear box. The driving mechanism may rotate the one and possibly more scrapers via a gear transmission, a chain transmission, a belt transmission and alike. Possibly the gear, chain or belt transmission drives the scraper by driving the rotating disc or race of one or more bearings to which the scraper is connected to. As an example, the rotating disc or race may comprise teeth with which one of the gear wheels of the transmission may engage or mesh. As an example, the rotating disc or race may comprise sprocket teeth with which the chain of the chain transmission may engage.

The scraper or scrapers may have any suitable shape and may be provided from any suitable material.

The scraper or scrapers may be simple polymeric or metal bars, having one side being parallel to the inner surface of the duct. More preferred, the scraper or scrapers are polymeric or metal plates, having its planar surface at least partially parallel to the inner side of the duct. The leading or foremost edge of the plate may be sharpened and provided as a cutting edge. The angle between the surface of the upper side of the plate, i.e. the side oriented away from the ducts inner surface, and the ducts inner surface at the leading edge, may be in the range of 0° to 20°, but preferably is in the range of 2° to 15°.The largest angle between the surface of the upper side of the plate, i.e. the side oriented away from the ducts inner surface, and the ducts inner surface, may be in the range of 0° to 90°, but preferably is in the range of 10° to 60°, e.g. in the range of 15° to 50°. The angle between the surface of the upper side of the plate, i.e. the side oriented away from the ducts inner surface, and the ducts inner surface at the leading edge may vary along the surface of the plate, and preferably is equal or gradually increasing for any line between the leading and trailing edge. The trailing edge of the scraper or scrapers may free of obstacles hindering the scraped material to fall over the trailing edge. As such, the scrapers may function as plows.

The scraper or scrapers may be provided from polymeric material, like reinforced polymer or polymer resin, or metal, like steel or even stainless steel. One or more surfaces of the scraper may be coated with a non-stick coating, e.g. a polymeric non-stick coating, e.g. PTFE. Alternatively, the scraper may be provided from anti-stick or non-stick polymeric material in its entirety.

The duct may be provided from polymeric material, like reinforced polymer or polymer resin, or metal, like steel or even stainless steel. The inner surface of the duct may be coated with a non-stick coating, e.g. a polymeric non-stick coating, e.g. PTFE or Polyurethane. This coating may be provided as a coating or as a liner, mechanically, e.g. using countersunk bolts, or chemically fastened to the inner surface of the duct. Optionally, the duct is provided from polymeric non-stick material in its entirety.

According to some embodiments, the scraper or scrapers may comprise a number of adjacent and optionally sidewise touching elements, like plates, each having a planar surface at least partially parallel to the inner side of the duct. The leading or foremost edges of the adjacent elements may be sharpened and may be provided as a cutting edges. As an example, adjacent elements each of about 100 to 200 mm wide may be used. The adjacent elements may be spring loaded on a common support or common supports, such that the leading edge may change position in a direction substantially perpendicular to the inner surface of the duct. As such this movement may accommodate unevenness on the inner surface of the duct. Also in case the scraper is provided by one metal or polymeric bar, the leading edge may be mount spring loaded to a support, in order to accommodate unevenness of the inner surface of the duct. The spring load may be adjustable to balance the scraping force applied and the wear this scraping action causes to the leading edge of the bar or elements.

According to a second aspect of the invention the funnels according to the first aspect of the invention, mare used for conveying bulk material. The use of these funnels may be the use for conveying bulk material dumped into the upper opening of the conical duct of the funnel, to a conveyor belt being mount under the lower opening of the conical duct.

Such bulk material may be sludge, like dredging sludge, e.g. partially dried dredging sludge, or sludge from water treatment processes like wastewater treatment processes, e.g. industrial wastewater treatment processes. Any bulk material may be conveyed by the funnel according to the first aspect of the invention.

The funnel may be part of a conveying system to convey bulk material, like sludge, from one position to another. As a mere example the bulk material, like sludge, may be provided and dumped, by dump trucks, hauls, or bulldozers or alike, into the upper opening of the funnel. The conveyed bulk material, like sludge, may be conducted via transport or carrying belts upwards to the top of a piling stack or into the cargo space of a ship.

The funnel according to the invention may be used in e.g. an autonomous unit, optionally being a mobile unit, comprising the funnel and an extraction belt, e.g. for loading with an excavator crane or wheel loader, so that the product can be dosed on a standard conveyor belt, which can move the material away from the unit. According to another, independent aspect of the invention, a funnel with an extraction belt, e.g. for loading with an excavator crane or wheel loader is provided, the funnel being free of the scraper.

When reference is made to a range in the context of this invention, the range is to be understood inclusive, except specified differently. It is understood that features of one aspect of the invention may be combined with one or more features of other aspects of the invention.

### Brief Description of the Drawings

Fig. 1 to 11 illustrate schematically various funnel for conveying bulk material according to the invention.
Fig. 12 illustrates schematically the inner side of a duct of a funnel according to any one of the figures 1 to 11.

The same reference signs refer to the same or similar features in the different figures.

### Detailed Description of Embodiment(s)

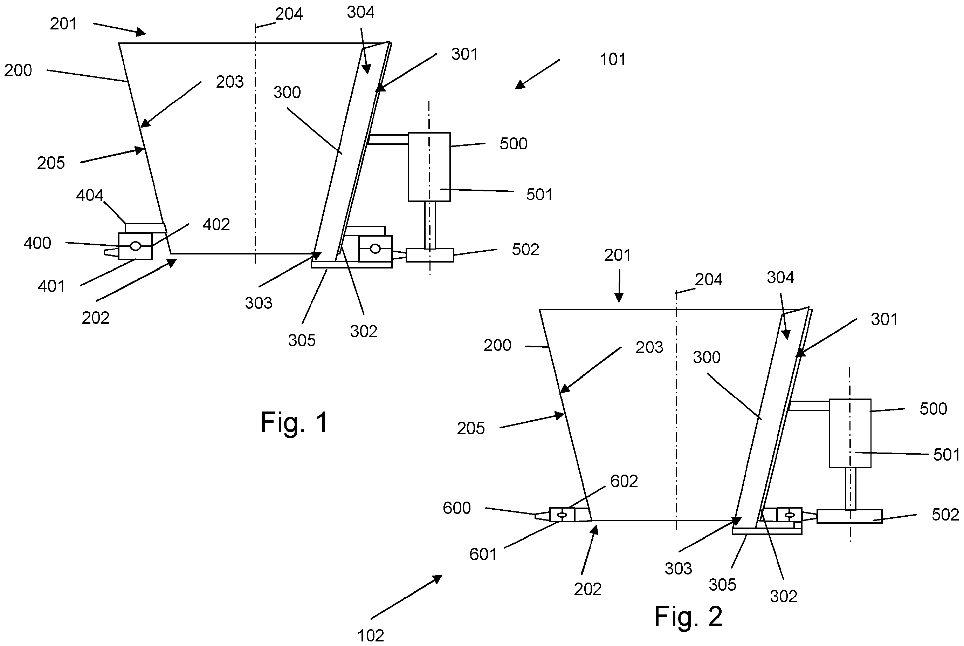

Figures 1 to 11 describe various different embodiments of a funnel according to the invention. It is understood that features of one of the embodiments of a funnel in one of the figures, may be combined or added to the embodiments of a funnel of any other of the figures.

In figure 1, a funnel 101 is shown, having a conical duct 200 with an upper opening 201 and a lower opening 202. As shown the lower opening 202 is substantially free of any object which could hinder the flow through of bulk material, like sludge, from through this lower opening 202. Also at the top side of the funnel, substantially no object is present which would hinder the feed of bulk material in the upper opening 201.

The funnel 101 comprises at least one, and in this funnel 101 one, scraper 300 which is adapted to rotate over the inner surface 203 of the duct 200, around an axis 204. The scraper has one contact side 301 to contact the inner surface 203 of the duct 200 along a contact path 302. The scraper 300 has a lower end 303 oriented to the lower opening 202 of the duct 200 and an upper end 304 oriented towards the upper opening 201 of the duct 200. The scraper 300 is held in contact to the inner surface 203, and is rotated in the inner volume of the duct 200, by a first rod 305 extending in a direction radially outwards from the conical duct axis 204. This first rod 305 is connected to lower end 303 of the first scraper 300 via the lower opening 202 of the duct 200.

The first rod 305 of the rotary scraper is mount on a bearing 400, the bearing being positioned around the outer side 205 of the conical duct. The bearing 400 is a thrust bearing. The first rod 305 is bolted to the lower ring 401 of the thrust bearing, the opposite upper ring 402 being immobile connected to the outer surface 205 of the duct 200 by bars 404, or to the frame of the funnel.

The driving mechanism 500 to rotate the scraper 300 is positioned radially adjacent the outer side 205 of the conical duct 200. The driving mechanism 500 may comprise a motor and accompanying gear box 501, and may rotate a gear wheel 502, which on its turn rotate the lower ring 401 of the thrust bearing, the gear teeth of the gear wheel 502 interacting with the teeth on the lower ring 401. The driving mechanism 500 is firmly mount on the frame of the funnel 101, optionally directly to the outer surface of the duct 200.

In figure 2, a funnel 102 is shown. The same reference signs refer to the same features of the funnel 101 of figure 1. The first rod 305 of the rotary scraper is mount on a bearing 600, the bearing being positioned around the outer side 205 of the conical duct. The bearing 600 is a slewing bearing. The first rod 305 is fixed, like bolted to the outer ring 601 of the slewing bearing, the opposite inner ring 602 being immobile connected to the outer surface 205 of the duct 200 by bars 404, or to the frame of the funnel. The driving mechanism 500 to rotate the scraper 300 is again positioned radially adjacent the outer side 205 of the conical duct 200. The driving mechanism 500 comprises a motor and accompanying gear box 501, and rotate a gear wheel 502, which on its turn rotate the outer ring 601, the gear teeth of the gear wheel 502 interacting with the teeth on the outer ring 601.

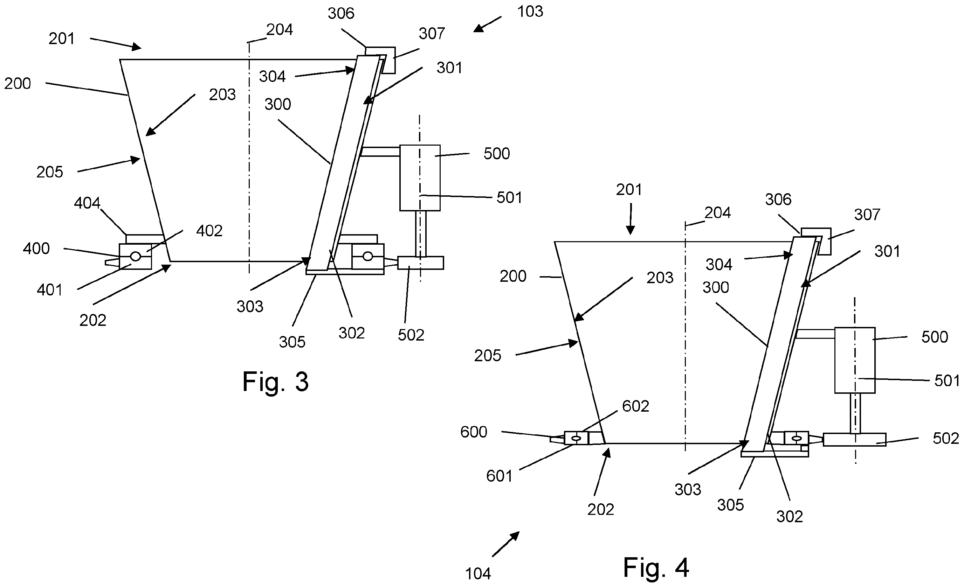

In figure 3, a funnel 103 is shown. The same reference signs refer to the same features of the funnel 101 of figure 1. A second rod 306 extending in a direction radially outwards from the conical duct axis and is connected to the upper end 304 of the first scraper 300 via the upper opening 201 of the duct 200. The second rod 306 has an L-shaped profile, forms a hook 307 which is positioned over the upper rim 210 of the upper opening 201 of the duct 200.

In figure 4, a funnel 104 is shown. The same reference signs refer to the same features of the funnel 101 of figure 1 and funnel 102 of figure 2. The funnel 104 is identical to the funnel 103 of figure 3, except that the bearing 600 as described for the funnel 102 of figure 2 is used.

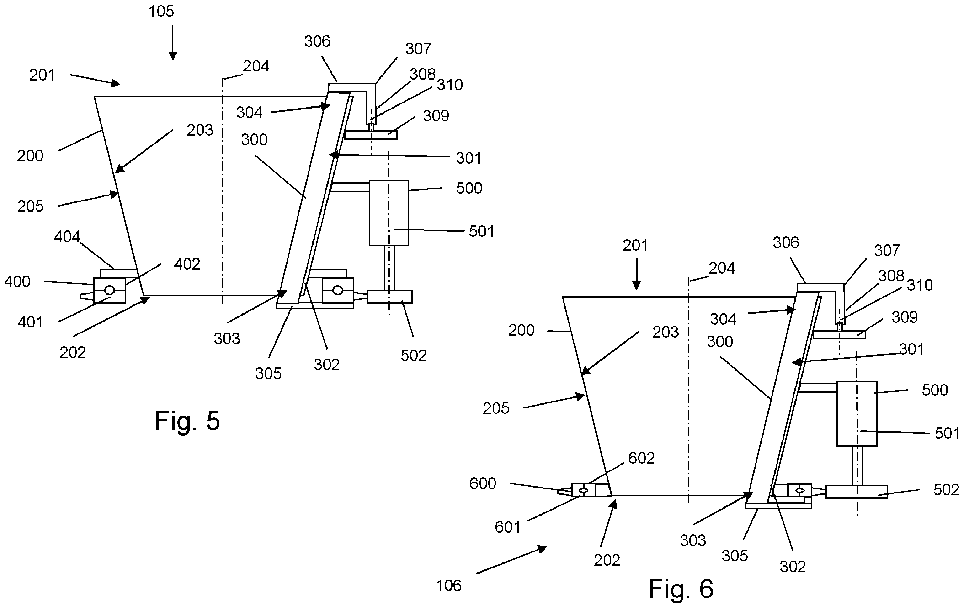

In figure 5, a funnel 105 is shown. The same reference signs refer to the same features of the funnel 101 of figure 1. A second rod 306 extending in a direction radially outwards from the conical duct axis and is connected to the upper end 304 of the first scraper 300 via the upper opening 201 of the duct 200. The second rod 306 has an L-shaped profile, forms a hook 307 which is positioned over the upper rim 210 of the upper opening 201 of the duct 200. At the flank 308 substantially parallel to the outer surface 205 of the duct 200, a free rotating wheel 309 is rotatably mount with its rotating axis 310 substantially parallel to the axis 204 of the duct 200.

In figure 6, a funnel 106 is shown. The same reference signs refer to the same features of the funnels 101, 102, 103 and 104 of figure 1 to 4 and funnel 105 of figure 5. The funnel 106 is identical to the funnel 105 of figure 5, except that the bearing 600 as described for the funnel 102 of figure 2 is used.

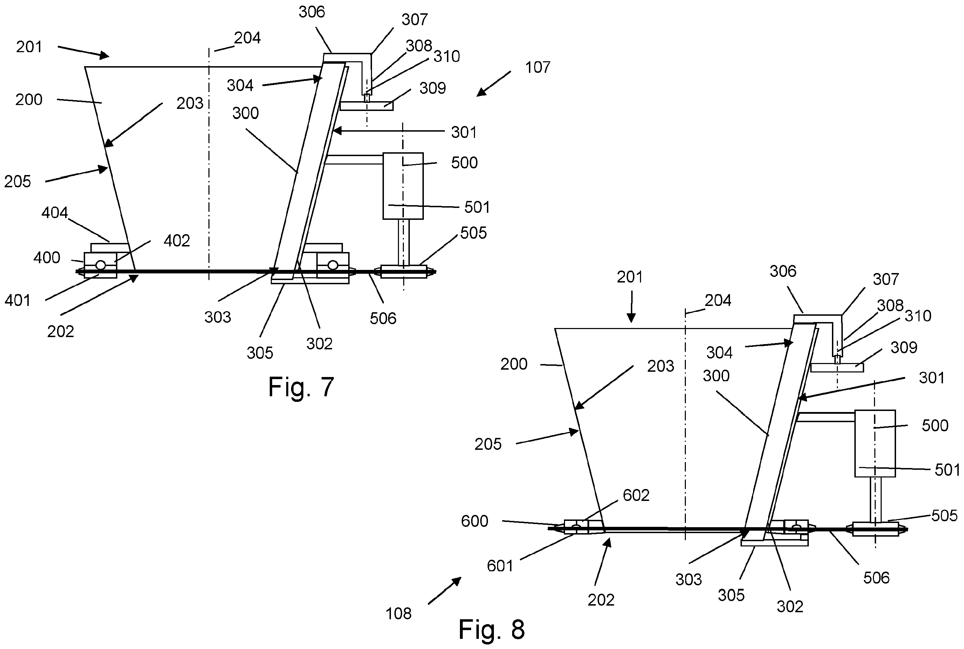

In figure 7 and 8, two funnels 107 and 108 are shown. The funnel 107 respectively 108 are identical to the funnels 105 of figure 5 and funnel 106 of figure 6, except that the transmission of the rotating movement of the motor and gear box 501 to the lower ring 401 of the thrust bearing 400, respectively the outer ring 601 of the slewing bearing 600, is not realised by a gear transmission. In both embodiments, the motor and gear box 501 rotates a sprocket 505, this sprocket moving a chain 506 which on its turn interact with teeth on the lower ring 401 of the thrust bearing 400, respectively the outer ring 601 of the slewing bearing 600.

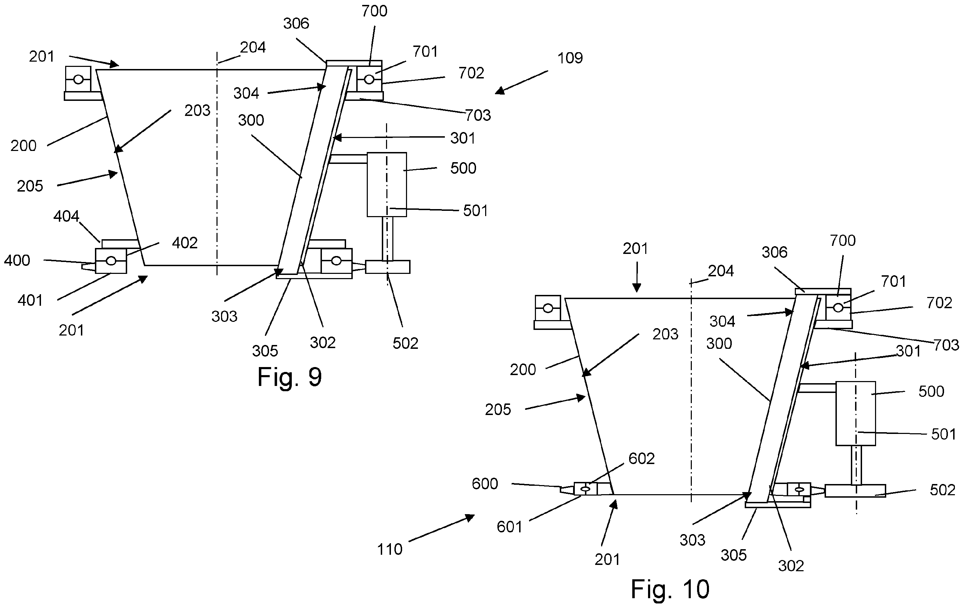

In figure 9, a funnel 109 is shown. The same reference signs refer to the same features of the funnel 101, 102,103, 104, 105 and 106 of figures 1 to 6. A second rod 306 extending in a direction radially outwards from the conical duct axis and is connected to the upper end 304 of the first scraper 300 via the upper opening 201 of the duct 200. The second rod 306 has is positioned over the upper rim 210 of the upper opening 201 of the duct 200. The second rod is connected to a bearing 700, the bearing being positioned around the outer side 205 of the conical duct. The bearing 700 is a thrust bearing. The second rod 306 is bolted to the upper ring 701 of the thrust bearing, the opposite lower ring 702 being immobile connected to the outer surface 205 of the duct 200 by bars 703, or to the frame of the funnel. The bearing 700 may be replaced by a slewing bearing.

In figure 10, a funnel 110 is shown. The same reference signs refer to the same features of the funnel 101, 102,103, 104, 105 and 106 of figures 1 to 6 and to funnel 109 of figure 9. The funnel 110 is identical to the funnel 109 of figure 9, except that the bearing 600 as described for the funnel 102 of figure 2 is used.

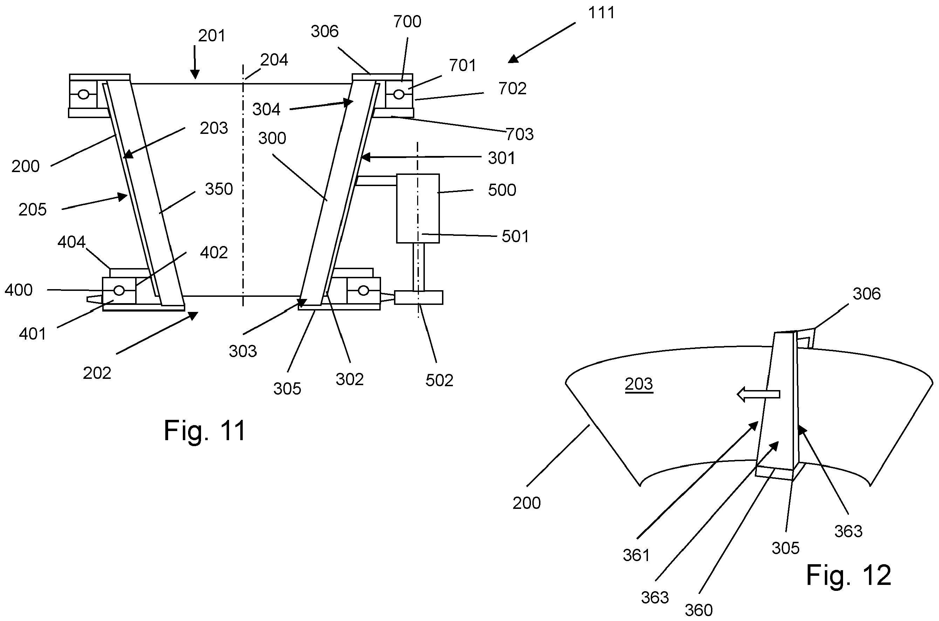

Figure 11, a funnel 111 is shown. The funnel 111 is identical to the funnel 109 of figure 9, except that a second this scraper 350 is provided, being identical to the scraper 300 and mounted to the duct in the very same way. The second scraper 350 is positioned diametrically opposite to the first scraper 300 in the duct and works in exactly the same way. Both scrapers 300 and 350 are mounted on the same bearing 400 at the lower opening 202 of the duct 200, are mount to the upper opening 201 of the duct in the same way using bearing 700 and are driven by the same driving mechanism 500.

As a mere example, the height of the conical duct 200 may vary. The duct has the shape of a frustum of a cone. The diameter of the upper opening, being preferably circular, may be in the range of 2500 to 5000mm, whereas diameter of the lower opening, also being preferably circular, may be in the range of 1000 to 2000mm. The angle of the cone is preferably in the range of 45 to 60°. The scraper or scrapers preferably rotate with a speed adapted to the products to be processed.

Figure 12 shows schematically a scraper 360, like scraper 300 or 350 of any of the figures 1 to 11, scraping the inner surface 203 of a metal conical duct 200. The scraper 360 comprises a metal plate, having its planar surface parallel to the inner side of the duct. The scraper 360 contacts the conical duct along the hole slant length of the cone shape. The leading or foremost edge 361 of the plate provides a cutting edge. The plate is slightly curved and the largest angle between the surface of the upper side of the plate, in this embodiment the angle at the trailing edge 362, is about 20°. The trailing edge 362 of the scraper 360 is free of obstacles hindering the scraped material to fall over the trailing edge. The material being cut from the inner surface 203, slides over the upper side 363 and is forced to fall over the trailing edge, where it falls downwards towards the lower opening 202 of the duct. The inner side of the duct 200 is coated with an anti-stick coating. Also the scrapers upper surface is coated with an anti-stick coating. Such coating may e.g. be a Teflon coating. Alternatively, the scraper may be provided from anti-stick polymeric material in its entirety.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A funnel for conveying bulk material, said funnel comprising a conical duct having an inner surface between an upper opening for receiving said bulk material and a lower opening for letting out said bulk material from said conical duct and at least a first rotary scraper, said first rotary scraper
- having a lower end oriented to the lower opening of the duct and an upper end oriented towards the upper opening of the duct;
- contacting said inner surface along a contact path between lower to upper opening of the conical duct;
- being rotatable in the duct;
**characterized in that** said first scraper is held in contact to the inner surface, and is rotated in the inner volume of the duct, by at least a first rod extending in a direction radially outwards from the conical duct axis, said at least first rod being connected to
- either the lower end of the first scraper via the lower opening of the duct;
- or the upper end of the first scraper via the upper opening of the duct.

2. A funnel according to claim 1, wherein said a least first rod being connected to the lower end of the first scraper via the lower opening of the duct.

3. A funnel according to any one of the preceding claims, wherein said first scraper is held in contact to the inner surface and is rotated in the inner volume of the duct by
• said at least a first rod extending in a direction radially outwards from the conical duct axis, said at least first rod being connected to the lower end of the first scraper via the lower opening of the duct, and
• at least a second rod extending in a direction radially outwards from the conical duct axis, said second rod being connected to the upper end of the first scraper via the upper opening of the duct.

4. A funnel according to claim 3, wherein said second rod forms a hook which is positioned over the upper rim of the upper opening of the duct or over the lower rim of the lower opening of the duct.

5. A funnel according to any one of the claims 4 to 5, wherein said second rod forms a hook which is positioned over the upper rim of the upper opening of the duct.

6. A funnel according to any one of the claims 4 to 5, wherein said second rod forms a hook has a profile having a flank extending along the outer surface of the duct, said flank being provided with at least one wheel adapted to roll around the outer surface of the duct when said at least first scraper is rotated in said duct.

7. A funnel according to any one of the claims 3 to 5, wherein said second rod is mount on a bearing, the bearing is positioned around the outer side of the conical duct.

8. A funnel according to any one of the preceding claims, wherein at least first rod of the rotary scraper is mount on a bearing, the bearing is positioned around the outer side of the conical duct.

9. A funnel according to claim 8 , wherein said bearing is a thrust bearing.

10. A funnel according any one of the claims 1 to 9, wherein the driving mechanism to rotate the first rotary scraper is positioned radially adjacent the outer side of the conical duct.

11. A funnel according to any one of the claims 1 to 10, wherein the scraper or scrapers comprise a number of adjacent and optionally sidewise touching elements, like plates, each having a planar surface at least partially parallel to the inner side of the duct.

12. A funnel according to claim 11, wherein the adjacent elements are spring loaded on one or more common supports.

13. The use of a funnel according to any one of the claims 1 to 12 for conveying bulk material.

14. The use of a funnel according to claim 13, for conveying bulk material dumped into the upper opening of the conical duct of the funnel, to a conveyor belt being mount under the lower opening of the conical duct.

15. The use of a funnel according to any one of the claims 13 to 14 to convey sludge.
